# FASCICULE DE BREVET EUROPEEN

(11) **EP 2 631 170 B1**
(45) Date de publication et mention de la délivrance du brevet: **07.12.2016**
(21) Numéro de dépôt: 13154913.1
(22) Date de dépôt: 12.02.2013
(51) Int. Cl.: B64C 13/04, B64C 13/46, G05G 5/03

(54) **Dispositif pour générer des efforts de rappel pour des manches tels que des manches d'aéronefs**
VORRICHTUNG ZUR ERZEUGUNG VON RÜCKKOPPLUNGSKRÄFTE FÜR STEUERKNÜPPEL WIE ZUM BEISPIEL Steuerknüppel für Luftfahrzeuge
DEVICE FOR GENERATING FORCE FEEDBACK FOR CONTROL STICKS SUCH AS AIRCRAFT JOYSTICKS

(30) Priorité: 23.02.2012 FR 1251677
(43) Date de publication de la demande: 28.08.2013
(73) Titulaire: Safran Electronics & Defense, 92100 Boulogne-Billancourt (FR)
(72) Inventeur: Robic, Bernard, 92100 Boulogne-Billancourt (FR); Gouard, Christian, 92100 Boulogne-Billancourt (FR); Gorecki, Hervé, 92100 Boulogne-Billancourt (FR)
(74) Mandataire: Lavialle, Bruno François Stéphane

(56) Documents cités:
- EP-A2- 1 977 970
- EP-A2- 2 078 998
- EP-B1- 1 773 655
- FR-A1- 2 872 306

## Description

L'invention concerne le domaine des dispositifs pour générer des efforts de rappel pour des manches tels que des manches d'aéronefs.

### ARRIERE PLAN DE L'INVENTION

On connaît des aéronefs conventionnels dont les gouvernes orientables de la voilure sont commandées mécaniquement par déplacement d'un manche de pilotage relié mécaniquement aux gouvernes.

On connaît aussi des aéronefs pour lesquelles l'orientation des gouvernes est réalisée par des actionneurs électriques et/ou hydrauliques commandés à l'aide de capteurs de déplacement du manche. Sur de tels appareils, le manche n'est donc pas lié mécaniquement aux gouvernes et l'utilisateur ne ressent pas au niveau du manche de résistance qui permette d'estimer les mouvements des gouvernes et les efforts qu'elles subissent. En effet, plus une gouverne s'éloigne de l'axe de l'écoulement du fluide dans lequel progresse l'aéronef et plus les efforts du fluide sur cette gouverne sont importants et ont tendance à rappeler au pilote que la gouverne est désaxée par rapport à l'écoulement de fluide.

On cherche donc en particulier sur des aéronefs à actionnement électrique et/ou hydraulique des gouvernes, à créer, sur le manche de pilotage, des efforts de rappel représentatifs de la position théorique des gouvernes. Ainsi le document US4580210A1 présente un dispositif de génération d'effort de rappel pour un manche de pilotage d'un aéronef. L'effort de rappel est engendré par des actionneurs électriques. En cas de panne de ces actionneurs, le pilote est privé de retour d'effort et cela peut présenter des dangers pour le pilotage.

Le document EP1977970, qui montre toutes les caractéristiques du préambule de la revendication 1, est considéré l'état de la technique plus proche.

### OBJET DE L'INVENTION

L'objet de la présente invention est de fournir un dispositif de génération d'effort de rappel pour un manche, qui permette de générer de manière fiable des efforts selon une loi qui soit prédéfinie.

### RESUME DE L'INVENTION

Pour ce faire il est proposé, selon l'invention, un dispositif de génération d'effort de rappel pour manche de commande mobile depuis une position neutre selon une trajectoire de déplacement. Le dispositif comprend des moyens de liaison mécanique du manche à des moyens élastiques de rappel du manche vers la position neutre. Les moyens de liaison mécanique et les moyens élastiques de rappel sont agencés pour produire, sur une première partie de la trajectoire, une première intensité d'effort de rappel et, sur une deuxième partie de la trajectoire, une deuxième intensité d'effort de rappel. Les moyens de liaison mécanique comportent une pièce de transmission adaptée, d'une part, à être liée mécaniquement audit manche de manière qu'à tout déplacement dudit manche le long de la deuxième partie de la trajectoire corresponde une rotation de la pièce de transmission qui est adaptée, d'autre part, à transmettre l'effort de rappel audit manche lorsque le manche est positionné dans la deuxième partie de la trajectoire.

Grâce à l'invention, l'effort de rappel du manche en position neutre est différent selon que le manche est positionné sur une partie de sa trajectoire ou sur une autre. Ceci permet d'avoir un ajustement de l'effort de rappel en fonction de la position du manche. Par ailleurs, la transmission des efforts de rappel est mécanique puisqu'elle se fait via les moyens de liaison mécanique, la pièce de transmission rotative et via une liaison mécanique du manche aux moyens élastiques de rappel. Ainsi on augmente la fiabilité de la fonction de rappel élastique d'intensité variable selon la position du manche puisque seuls des moyens mécaniques interviennent dans cette génération d'efforts.

Selon l'invention, les moyens élastiques de rappel comportent au moins un premier type de moyens élastiques de rappel, chaque moyen élastique du premier type comportant des première et deuxième barres de torsion et des moyens de couplage en rotation de ces première et deuxième barres de torsion avec la pièce de transmission, ces moyens de couplage étant agencés pour :
- coupler ladite première barre de torsion à la pièce de transmission lorsque cette pièce de transmission est pivotée, par rapport à une position de référence prédéterminée (Ref), d'un angle appartenant à un premier secteur angulaire de couplage (A1) ;
- coupler ladite deuxième barre de torsion à la pièce de transmission lorsque cette pièce de transmission est pivotée, par rapport à la position de référence prédéterminée (Ref), d'un angle appartenant à un deuxième secteur angulaire de couplage (A2) différent du premier secteur angulaire ;
- découpler ladite deuxième barre de torsion vis-à-vis de la pièce de transmission lorsque cette pièce de transmission est pivotée par rapport à la position de référence prédéterminée (Ref) d'un angle situé en dehors du deuxième secteur angulaire prédéterminé (A2).

Ainsi, l'effort de rappel F dépend en partie d'une raideur de torsion propre à la barre de torsion qui est couplée en rotation avec la pièce de transmission. Avec une barre de torsion, la raideur élastique est parfaitement symétrique indépendamment du sens de sa torsion (ce qui simplifie le réglage de l'effort de rappel souhaité pour chaque position du manche). La barre de torsion est préférentiellement agencée pour générer un effort élastique de rappel par torsion pure de cette barre.

Dans un mode de réalisation préférentiel, ce dispositif peut comporter un nombre n de barres de torsion pour générer au moins un nombre n de pentes différentes de lois d'efforts.

La rigidité des barres limite les modes vibratoires par rapport aux systèmes à ressort hélicoïdaux ou de traction compression et donc revêt un intérêt particulier pour le control d'appareil à fort spectre vibratoire comme les hélicoptères. Contrairement aux systèmes qui comporteraient des ressorts hélicoïdaux, les barres de torsion permettent chacune de générer des lois d'efforts linéaires, sans dérive de pente (la pente étant la raideur élastique angulaire définissant l'élasticité angulaire de la barre).

### BREVE DESCRIPTION DES DESSINS

D'autres caractéristiques et avantages de l'invention ressortiront de la description qui en est faite ci-après, à titre indicatif et nullement limitatif, en référence aux dessins annexés, parmi lesquels:
- la figure 1 est une vue partielle en perspective d'un système de commande comprenant le dispositif de génération d'effort de rappel selon un premier mode de réalisation l'invention ;
- la figure 2 est un schéma cinématique du dispositif de l'invention présenté à la figure 1, sans son manche de commande ;
- la figure 3 représente une vue en perspective d'une des barres de torsion utilisées dans le dispositif de génération d'effort de rappel des figures 1 et 2 ;
- la figure 4 est autre vue en perspective de la barre de torsion de la figure 3 assemblée avec un support ;
- la figure 5 présente une vue en coupe A-A de la barre de torsion et du système de butées angulaires présentée à la figure 4 ;
- la figure 6 représente en perspective d'une partie du dispositif selon l'invention présenté à la figure 1 ;
- la figure 7 est une vue de côté du dispositif présenté aux figures 1 et 6, dans un plan perpendiculaire à l'axe de rotation de la pièce de transmission ;
- la figure 8 est une vue en coupe longitudinale B-B partielle de la pièce de transmission rotative du dispositif de l'invention présenté aux figures 1 et 6 ;
- la figure 9 est une vue en coupe longitudinale d'un premier type de moyens élastiques de rappel utilisables en combinaison avec l'un quelconque des modes de réalisation du dispositif selon l'invention ;
- la figure 9C est une vue en perspective (avec coupe partielle) illustrant une partie des moyens élastiques schématisés à la figure 9 ;
- la figure 10 est une vue en coupe longitudinale d'un deuxième type de moyens élastiques de rappel utilisables en combinaison avec l'un quelconque des modes de réalisation du dispositif selon l'invention ;
- la figure 11 est un diagramme illustrant l'évolution de l'effort de rappel F en fonction de la trajectoire Traj du manche s'étendant entre -20° et +20° de rotation du manche ;
- les figures 12a, 12b, 12c, 12d illustrent différentes positions angulaires d'une pièce de sélection assujettie en rotation avec l'arbre de transmission, cette pièce de sélection étant sélectivement en prise avec l'un et/ou l'autre des moyens élastiques de rappel en fonction de la position angulaire ;
- la figure 13 est une vue schématique d'un système selon l'invention comprenant un dispositif de génération d'effort de rappel et des moyens de liaison du manche au dispositif de génération d'effort qui sont alternatifs à ceux de la figure 1.

### DESCRIPTION DETAILLEE DE L'INVENTION

L'invention concerne un dispositif de génération d'effort de rappel 1 pour un manche de commande 2 monté sur un support Sup pour être mobile selon une trajectoire de déplacement 3. Ce support Sup permet la fixation du dispositif 1 dans son environnement qui est par exemple un accoudoir d'un fauteuil de pilotage d'aéronef.

Le dispositif comporte des moyens élastiques de rappel 4 relié au manche 2 par des moyens de liaison mécanique 5 via au moins un arbre de transmission 6.

Le dispositif 1 selon l'invention permet, dans chacun de ses modes de réalisation, de générer des efforts de rappel F sur le manche de pilotage 2 qui sont fonction de la position du manche le long de sa trajectoire 3. La génération d'effort de rappel F se fait à l'aide des moyens élastiques de rappel 4 qui seront décrits ci-après et en fonction d'un couplage mécanique réalisé par les moyens de liaison mécanique 5 du manche aux moyens élastiques 4.

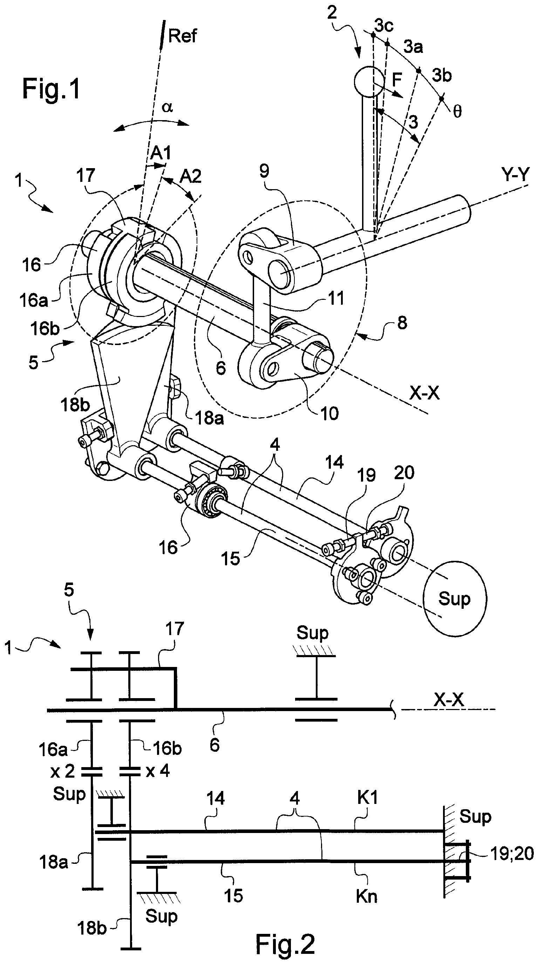

Les moyens de liaison mécanique 5 sont adaptés pour qu'à tout déplacement du manche 2 le long de sa trajectoire 3 corresponde une rotation de l'arbre de transmission 6. Comme on le verra par la suite, l'intensité de l'effort élastique de rappel F dépend de l'angle de rotation ALPHA de l'arbre de transmission 6 qui dépend lui-même de la position du manche 2. ALPHA désigne un angle de rotation de l'arbre de transmission 6, selon son axe X-X, par rapport à une position angulaire de référence Ref de cet arbre 6 (voir par exemple la figure 1). Cette position de référence Ref correspond à une position angulaire neutre du manche 2 non sollicité.

Les moyens de liaison mécanique 5 sont agencés pour que la ou les barres de torsions soient couplées soit en permanence, soit sélectivement, en fonction de l'angle de rotation de l'arbre de transmission 6.

Les moyens de liaison 5 et les moyens élastiques 4 sont aussi agencés pour générer un effort de rappel F qui présente :
- une première intensité I1 sur une première partie 3a de la trajectoire 3 du manche 2 ; et
- une deuxième intensité I2 sur une deuxième partie 3b de la trajectoire 3.

La première intensité I1 est variable suivant la formule I1 = K1 * ALPHA et la deuxième intensité I2 est variable suivant la formule I2 = K2 * ALPHA, K1 et K2 définissant respectivement des raideurs élastiques constantes et différentes l'une de l'autre. L'effort de rappel F varie ainsi selon deux lois distinctes respectivement actives sur les première et deuxième parties 3a, 3b de la trajectoire 3 en fonction de l'angle de rotation ALPHA de l'arbre de transmission 6.

Il est aussi proposé selon l'invention plusieurs types alternatifs de moyens de liaison mécanique 5 et plusieurs types alternatifs de moyens élastiques de rappel 4. Selon la combinaison choisie de moyens élastiques 4 et des moyens de liaison mécanique 5 on détermine simplement le nombre et le type des lois de rappel élastique.

### LES MOYENS DE LIAISON MECANIQUE

L'arbre de transmission 6, monté à rotation selon un axe X-X, fait partie des moyens de liaison mécanique.

### a) La liaison entre le manche 2 et l'arbre de transmission 6.

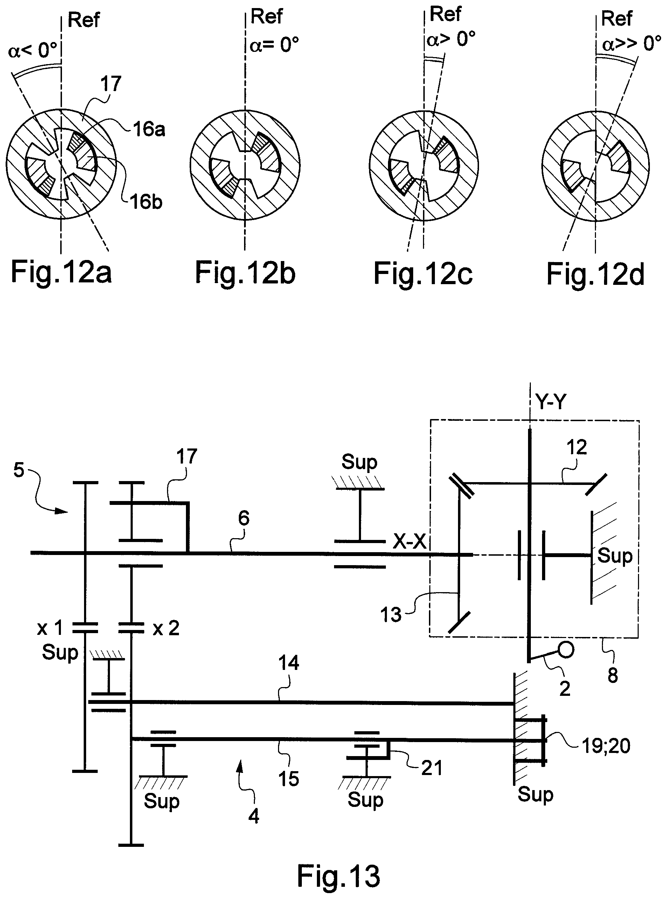

Cette liaison peut revêtir différentes formes et ne fait pas partie en elle-même de l'invention. L'arbre de transmission 6 et le manche 2 peuvent ainsi être liés mécaniquement entre eux :
- soit en solidarisant le manche 2 avec l'arbre 6 de manière que l'arbre de transmission 6 et le manche 2 soient montés à rotation selon un même axe X-X (solution non représentée sur les figures) ;
- soit, via un système de renvoi d'efforts 8 comme illustré sur les figures 1 ou 12a, 12b, 12c, 12d, lorsque le manche 2 est monté à rotation selon un axe Y-Y distinct de l'axe de rotation X-X.

Selon un premier mode de réalisation du système de renvoi d'efforts 8 illustré sur la figure 1, l'axe Y-Y est perpendiculaire à l'axe X-X et le manche 2 est solidaire d'une manivelle 9 s'étendant perpendiculairement à l'axe Y-Y. L'arbre de transmission 6 porte une manivelle 10 s'étendant perpendiculairement à l'axe X-X. Une bielle 11 est articulée à ses extrémités respectives aux extrémités respectives des manivelles 9, 10.

Selon un deuxième mode de réalisation du système de renvoi d'efforts 8 (voir figures 12a, 12b, 12c, 12d), un engrenage conique 12 d'axe de rotation Y-Y est fixé au manche 2 pour engrener avec un engrenage conique 13 'axe X-X et solidaire de l'arbre de transmission 6 de sorte que les engrenages 12, 13 réalisent un renvoi d'angle.

### b) Liaison entre l'arbre de transmission et les moyens élastiques de rappel.

Comme on le verra par la suite, les moyens élastiques de rappel 4 comportent au moins une barre de torsion 14, 15. Chacune des barres de torsion 14, 15 est reliée à l'arbre de transmission 6 par moyens de couplage 16 appartenant aux moyens mécaniques de liaison 5. Ces moyens de couplage 16 comportent une pièce de sélection 17 liée en rotation avec l'arbre de transmission 6 et destinée à réaliser un couplage sélectif des barres de torsion 14, 15 avec l'arbre de transmission 6 en fonction de la position angulaire de l'arbre de transmission 6.

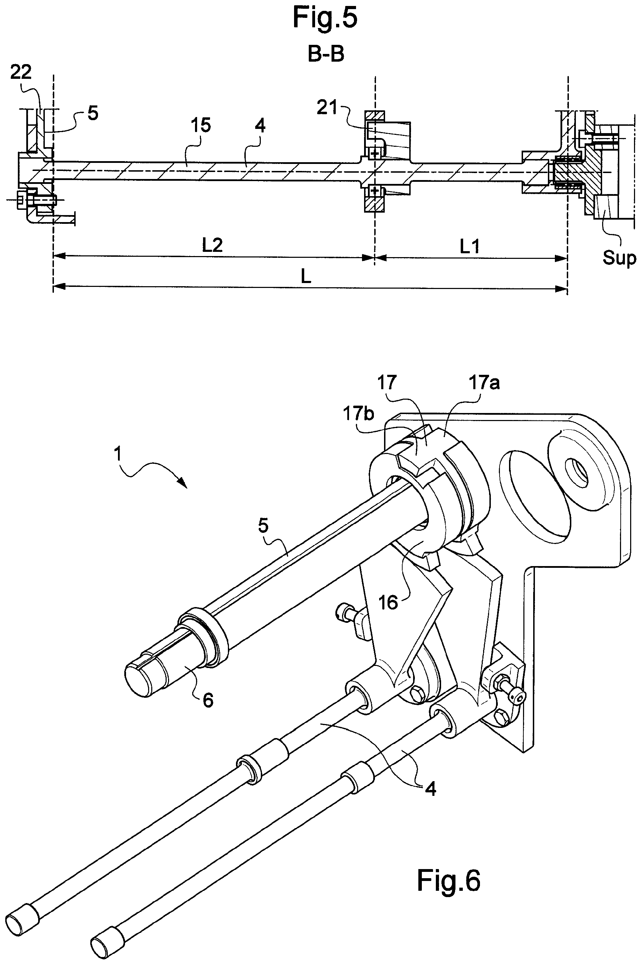

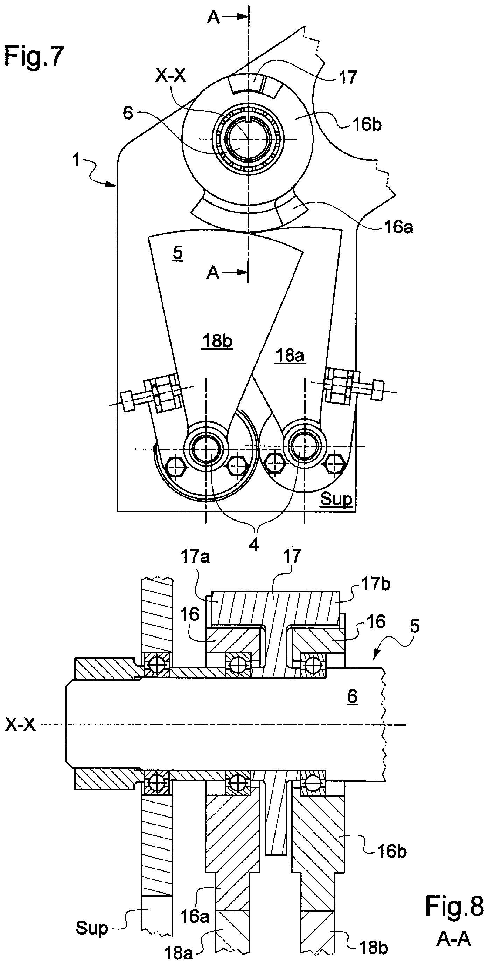

Dans le mode de réalisation de la figure 1, détaillé aux figures 6, 7 et 8, la pièce de sélection 17 est formé par un plateau en saillie radiale de l'arbre de transmission 6. La pièce 17 porte des butées angulaires 17a, 17b s'étendant de part et d'autre de la pièce 17 en saillie parallèlement à l'axe X-X. Les moyens de couplage 16 comportent en outre des première et deuxième bagues 16a, 16b qui sont montées pivotantes autour de l'arbre de transmission 6 de part et d'autre du plateau 17 et comportent chacune une encoche externe recevant avec un jeu latéral la butée angulaire 17a, 17b respectivement. Ainsi chaque butée angulaire de la pièce 17 limite la capacité de rotation d'une des bagues 16a, 16b par rapport à l'arbre de transmission 6. Les encoches des bagues 16a, 16b sont décalées l'une de l'autre de manière à ce que la rotation de l'arbre de transmission 6 entraîne :
- les deux bagues 16a, 16b sur une même portion angulaire de rotation ;
- la seule bague 16a sur une autre portion angulaire ; et enfin
- la seule bague 16b sur une dernière portion angulaire.

Chacune des barres de torsion 14, 15 est solidaire d'une pièce d'entraînement correspondante 18a, 18b reliée par des secteurs dentés respectivement à la première bague 16a et à la deuxième bague 16b de façon qu'à toute rotation la bague 16a, 16b corresponde respectivement une rotation de la pièce d'entraînement 18a, 18b.

Ainsi, comme illustré à la figure 1, les butés angulaires 17a, 17b de la pièce de sélection 17 sont telles que :
- seule la barre de torsion 14 est couplée à rotation avec l'arbre de transmission 6 lors de la rotation de l'arbre de transmission 6 suivant le premier secteur angulaire A1 correspondant au déplacement du manche 2 le long du premier secteur 3a de trajectoire 3 ;
- les deux barres de torsion 14 et 15 sont couplées à rotation avec l'arbre de transmission 6 lors de la rotation de l'arbre de transmission 6 suivant un deuxième secteur angulaire A2 correspondant au déplacement du manche 2 le long du deuxième secteur 3b de trajectoire 3.

Ainsi, sur le secteur angulaire A1 la raideur est celle de la seule barre 14, c'est-à-dire K1 et sur le secteur angulaire A2, la raideur K2 est une combinaison des raideurs respectives des barres 14, 15. On note que ces premier et deuxième secteurs A1, A2 sont différents l'un de l'autre c'est-à-dire qu'ils ne sont pas intégralement superposés l'un avec l'autre.

### LES MOYENS ELASTIQUES DE RAPPEL

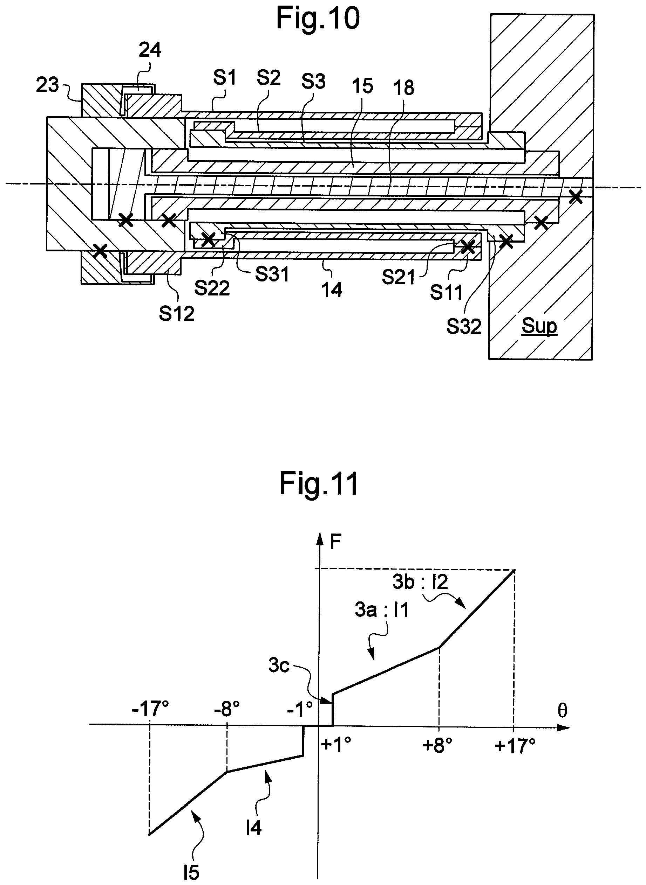

Comme indiqué précédemment, les moyens élastiques de rappel 4 comportent au moins une barre de torsion 14 et préférentiellement deux barres de torsion 14, 15 pour générer un effort F de rappel d'intensité I1, I2, I4, I5 variable en fonction de la position du manche le long de sa trajectoire 3 (ces variations seront illustrées avec la figure 11).

Chaque barre 14, 15 est d'une part reliée à l'arbre de transmission 6 au moins via les moyens de couplage 16 et d'autre part reliée au support Sup.

La liaison des barres 14, 15 au support Sup peut être réalisée :
- soit par encastrement, comme c'est le cas de la barre 14 sur les figures 2, 9, 10, 13 de manière qu'une extrémité de la barre de torsion reste fixe par rapport à l'extrémité portant les pièces d'entraînement 18a ;
- soit par une liaison pivot présentant des butées radiales limitant la capacité de rotation de la barre par rapport au support Sup, comme c'est le cas pour la barre de torsion 15 des figures 1, 2, 3, 4, 5, 13.

On voit notamment sur les figures 1, 2, 3, 4, 13 des exemples de liaison pivot avec butées 19, 20 de la barre de torsion 15 avec le support Sup. Les butées angulaires 19 et 20 sont des vis arrangées de part et d'autre d'un ergot formé sur l'extrémité tournante de la barre 15. On détermine les positions de butées de l'ergot, et donc l'amplitude de rotation autorisée de la barre de torsion 15 par rapport au support Sup, en réglant les positions des extrémités des vis 19, 20. Comme illustré aux figures 2 et 13, une des barres de torsion, ici la barre de torsion 14, peut avoir une extrémité liée en encastrement avec le support Sup alors qu'une autre barre, ici la barre de torsion 15 a une extrémité montée à rotation par rapport au support Sup dans la limite d'un angle de rotation déterminé par les butées 19, 20.

Dans un mode de réalisation particulier, au moins une des barres de torsion, ici la barre 15, peut être associée à des butées angulaires 21 pour limiter la longueur de torsion de chaque barre en fonction de son angle de torsion. Ainsi, comme illustré aux figures 1, 3, 4, 5, 13, les butées angulaires 21 sont disposées de manière à :
- autoriser la torsion de la barre de torsion sur toute sa longueur L dans une limite de torsion maximale définie par les butées angulaires 21 ; et
- au-delà de cette limite de torsion maximale de la barre, autoriser l'augmentation de la torsion de la barre sur une portion L1 seulement de sa longueur L, l'augmentation de la torsion étant interdite sur le reste L2 de cette longueur. L'usage de telles butées angulaires 21 détermine la variation de raideur de la barre 15 en fonction de son angle de torsion. Une seule et même barre peut ainsi servir à générer deux raideurs telles que K1 et K2.

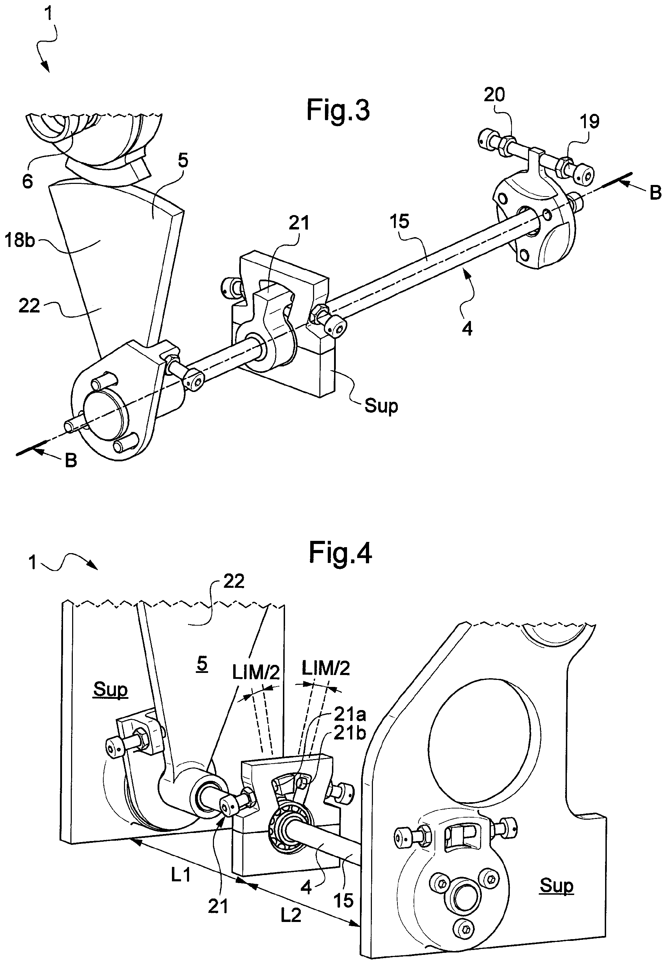

Comme on le voit sur le détail des figures 4 et 5, les butées 21a, 21b coopèrent avec une butée solidaire de la barre de torsion 15 et sont montées sur le support Sup à une distance L1 de la liaison entre la barre 15 et le support Sup et à une distance L2 d'un moyen de couplage à rotation 22 de la barre. La raideur K1 peut correspondre à la raideur de torsion de toute la longueur L de la barre de torsion. Tant que l'angle de torsion de la barre est inférieur à un secteur angulaire LIM/2 défini par chaque butée 21a, 21b pour s'étendre d'un côté d'une position de référence Ref (soit une amplitude de torsion maximale LIM, voir la figure 4), la barre 15 est tordue sur toute sa longueur L et sa raideur est K1. La raideur K2 peut correspondre à la raideur de torsion de la portion de longueur L2 de la barre, alors que la portion de longueur L1 de la barre est bloquée en rotation par le système de butées 21. Passée la limite de torsion maximale prédéterminée Lim/2, les butées 21 interdisent l'augmentation de la torsion de la première portion de longueur L1 de barre et autorisent uniquement l'augmentation de torsion de la deuxième portion de longueur L2.

### LES DIFFERENTES SORTES DE BARRES DE TORSION

On note qu'il existe plusieurs sortes de barres de torsion toutes utilisables pour la mise en oeuvre du dispositif de l'invention. Dans un même dispositif de génération d'effort de rappel, il est possible de combiner des barres 14, 15 d'une seule sorte ou alternativement de combiner des barres de torsion de différentes sortes.

Ainsi les barres 14, 15 illustrées aux figures 1 à 8 sont des barres pleines formant une première sorte de barre de torsion.

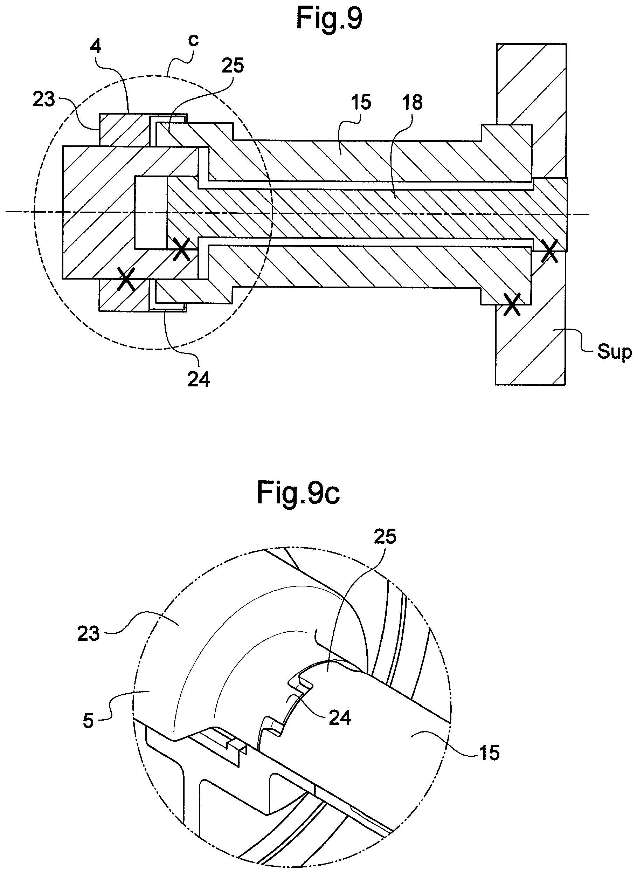

La barre 15 illustrée aux figures 9 et 10 est une barre tubulaire creuse formant une deuxième sorte de barre de torsion.

Une troisième sorte de barre de torsion est visible à la figure 10. La barre de torsion 14 est ici constituée d'au moins trois sections tubulaires élastiques S1, S2, S3 disposées de manière concentrique et montées en série, c'est-à-dire que les première et troisième sections S1, S3 sont reliées entre elles par l'intermédiaire de la section S2. La première de ces sections S1 possède une extrémité S11 reliée fixement à une première extrémité S21 de la deuxième de ces sections S2 de manière que la torsion de la barre 14 se fasse forcément au moins entre une deuxième extrémité S12 de la première section S1 et une deuxième extrémité S22 de la deuxième section S2. La deuxième section S2 est reliée fixement à une première extrémité S31 de la troisième de ces sections S3. Enfin, les liaisons de la deuxième section S2 avec les première et troisième sections S1, S3 sont prévues pour être éloignées l'une de l'autre. Par cet assemblage la torsion de la barre 14 se fait toujours entre la deuxième extrémité S12 de la première section S1 et la deuxième extrémité S32 de la troisième section S3.

Avec une telle barre de torsion la raideur est réduite en augmentant la longueur des sections S1, S2, S3. Ce montage permet également d'avoir une grande capacité de déformation de la barre, sans avoir à augmenter sa longueur. En effet, la raideur totale K d'une telle barre est donnée par la formule 1/K=1/K'+1/K"+1/K"' où K', K" et K'" sont les raideurs respectives des sections élastiques S1, S2, S3. De plus, la capacité de déformation angulaire d'une telle barre 14 est égale à la somme des capacités de déformation angulaire de chacune des sections élastiques S1, S2, S3.

Les barres de cette troisième sorte peuvent ne comporter que deux sections tubulaires élastiques S1, S2 ou plus de trois sections disposées de manière concentrique.

Dans le cas illustré aux figures 9, 9c, 10, la barre de torsion 15 a la forme d'un tube à l'intérieur duquel est placée barre 18. Ce mode de réalisation favorise la compacité du dispositif 1. Ceci est particulièrement avantageux lorsque l'on intègre le dispositif dans un accoudoir de siège dont le volume intérieur est limité.

L'ensemble de barres formé d'au moins une barre tubulaire 14 et d'au moins une autre barre de torsion 15 s'étendant à l'intérieur de la barre tubulaire 15 est ici équipé d'une fonction de couplage sélectif des barres en torsion (le couplage des barres est sélectif en fonction de l'angle de torsion de l'ensemble, voir plus particulièrement la figure 10). Ainsi, chaque ensemble de barres à couplage sélectif est composé de deux barres de torsion 15, 18 ayant chacune :
- des premières extrémités fixées l'une à l'autre pour toujours pivoter ensemble ; et
- des deuxièmes extrémités qui sont indépendantes en rotation l'une par rapport à l'autre sur un premier secteur angulaire de torsion d'une de ces barres et qui sont indexées à rotation l'une avec l'autre sur un second secteur angulaire.

Ceci permet d'avoir deux lois de torsion se succédant lors de la rotation de l'une de ces barres au-delà de l'angle de couplage.

Dans le même mode de la figure 10, une fonction de redondance de barres est réalisée avec la troisième barre de torsion 18 placée de manière concentrique vis-à-vis des première et deuxième barres de torsion 14, 15. Cette troisième barre 18 est pleine et est positionnée à l'intérieure des barres tubulaires 14, 15. Les extrémités de la barre 18 sont assemblées fixement avec les extrémités de la deuxième barre 15 (les croix entre les barres 14, 15, 18, symbolisent des liaisons d'encastrement avec le support Sup).

Comme les barres concentriques 15, 18 ont leurs extrémités respectives solidaires entre elles, en cas de rupture de l'une de ces barres une fonction de rappel élastique dégradée est maintenue.

Dans des modes de réalisations préférentiels, tel que celui de la figure 1, on fait en sorte que les moyens de liaison mécanique liant des moyens élastiques de rappel à l'arbre de transmission 6 soient agencés pour que les moyens élastiques soient découplés du manche 2 sur une troisième partie de trajectoire 3c de déplacement du manche 2 distincte des première et deuxième parties 3a, 3b.

Ainsi sur cette partie de trajectoire 3c dite partie de déconnexion, les barres de torsion n'exercent pas d'effort de rappel élastique sur le manche. Le manche peut être déplacé le long de toute cette partie de trajectoire 3c sans contraindre les moyens élastiques, l'utilisateur ne ressentant alors pas de résistance au déplacement du manche 2.

Cette trajectoire de déconnexion 3c peut être obtenue en jouant sur la largeur des encoches au niveau des bagues 16a et 16b. Cette trajectoire de déconnexion peut aussi être obtenue en permettant une rotation d'au moins une des barres de torsion par rapport au support Sup sur un angle de déconnexion prédéterminé par les butées radiales 19 et 20.

On peut aussi réaliser cette trajectoire de déconnexion 3c en couplant le manche 2 à l'arbre de transmission 6 à l'aide d'un élément de couplage rotatif sélectif 23 (figure 9c). L'élément de couplage sélectif 23 est lié à rotation avec l'arbre de transmission 6. Sur un secteur angulaire de découplage donné de l'arbre 6, l'élément de couplage 23 est entrainé à rotation tout en étant découplé à rotation par rapport à une extrémité de la barre de torsion 18 à laquelle l'élément 23 est assemblé. L'élément de couplage 23 est tel qu'en dehors du secteur angulaire de découplage il réalise un couplage à rotation de l'arbre de transmission 6 avec la barre 15 pour générer un effort élastique de rappel du manche. L'élément de couplage 23 est ici une pièce montée à rotation selon l'axe de torsion de la barre 15 et comportant des dentures 24 complémentaires de dentures 25 de la barre 15. Ces dentures 24, 25 de la barre 14 et de l'élément de couplage 23 sont éloignées les unes des autres sur un secteur angulaire prédéterminé de rotation de l'élément 23 par rapport à la barre 15 et sont en contact sur un autre secteur angulaire permettant ainsi de lier sélectivement à rotation l'élément 23 et l'extrémité engrainée de la barre 15.

La figure 11 illustre l'effort de rappel F généré sur le manche 2, en fonction de l'angle d'orientation θ de ce manche exprimé en degrés.

On constate que, sur la partie de déconnexion 3c, le manche est pivoté, par exemple, entre -1 et +1° autour de la position de référence 0° sans que qu'un effort de rappel F ne soit généré. Dans le mode de la figure 1, cette partie de déconnexion est obtenue par le réglage des butées 19 et 20 ainsi que par les formes des encoches pratiquées sur les bagues 16a et 16b et les formes des ergots 17a, 17b pénétrant respectivement dans ces encoches.

Dès que le manche 2 est déplacé sur sa première partie de trajectoire 3a qui s'étend entre +1° et +8° alors un effort élastique de rappel s'exerce sur le manche car l'arbre de transmission 6 a pivoté d'un angle suffisant pour commander le pivotement d'une des barres de torsion. En l'occurrence la barre 15 pivote de +1° jusqu'à ce qu'elle vienne en butée angulaire contre l'une des butées 19, 20. Sur cette plage +1° à 8°, l'effort élastique résulte de la torsion d'une seule des barres car l'arbre de transmission 6 ne bute que sur une seule des encoches des bagues 16a et 16b. Passé un angle de pivotement du manche 2 de 8°, le manche 2 se trouve alors dans sa deuxième partie de trajectoire 3b et l'effort élastique de rappel prend alors une forme de fonction linéaire de raideur supérieure à celle constatée sur la première partie 3a. En fonction du réglage choisi du dispositif cette augmentation de la raideur sur la deuxième partie de trajectoire 3b s'explique :
- parce que l'arbre de transmission 6 entraîne le pivotement simultané des bagues 16a et 16b ; et/ou
- parce que la barre de torsion 15 vient en butée via le système de butée 21 contre des butées 19, 20 fixées au support Sup limitant ainsi la longueur de torsion de la barre à la longueur L2.

Un fonctionnement sensiblement symétrique est appliqué dès lors que le manche est orienté d'un angle de - 1° à environ -8°, on voit alors que l'intensité I4 de l'effort F augmente en valeur absolue selon une fonction linéaire de pente constante jusqu'à atteindre une valeur de rappel d'environ -13 N. Dès lors que le manche est incliné d'un angle compris entre -8° et -17°, on constate que la valeur absolue de l'intensité I5 de l'effort va en augmentant avec la valeur absolue de l'angle selon une loi linéaire de pente constante. Cette pente constante a une valeur absolue supérieure à celle de la partie générant l'effort d'intensité I4.

Comme indiqué ci-avant en référence aux figures 9 et 10, on peut aussi faire varier la raideur des moyens élastiques le long de la trajectoire du manche 2 en utilisant un ensemble de deux barres à couplage sélectif en fonction de l'angle de torsion de l'une des barres de cet ensemble. Pour cela, les moyens de liaison mécanique 5 comportent une pièce de couplage sélectif 23 de deux extrémités de barres de torsion concentriques 14, 15.

Une extrémité de la barre 15 est encastrée avec cette pièce 23 de manière à toujours pivoter avec elle. Cette pièce 23 présente de butées radiales / dents 24 complémentaires de butées radiales / dents 25 formées à une extrémité de la barre de torsion 14. Cette extrémité de la barre 14 est libre de pivoter par rapport à la pièce 23 tant que les butées de la barre 14 ne sont pas en contact contre les butées 24 de la pièce 23. Etant donné que des extrémités de chacune des barres 14 et 15 sont encastrées dans le support Sup et que les autres extrémités de ces barres sont liées sélectivement entre elles par la pièce 23, on constate que la raideur de l'ensemble varie dans un premier temps selon une première pente et dans un second temps suivant une deuxième pente.

L'invention n'est pas limitée aux exemples décrits précédemment et peut comporter d'autres modes de réalisation non décrits entrant dans le champ de l'invention telle que définie par les revendications.

En particulier, l'invention comprend également les dispositifs comportant au moins un moyen élastique du premier type et au moins un moyen élastique du deuxième type qui sont simultanément couplés à l'arbre de transmission 6.

Au cours de la rotation de l'arbre de transmission 6, on bénéficie des efforts élastiques de rappel générés par les moyens élastiques des premier et deuxième types qui ont chacun deux règles de variation d'intensité des efforts propres. On peut ainsi phaser ces différentes règles de variation d'intensité des efforts élastiques de rappel pour obtenir une règle de variation globale qui reproduise des efforts de rappel types auxquels est habitué l'utilisateur. L'invention est particulièrement avantageuse car elle permet de produire des règles complexes de génération d'effort de rappel sans avoir besoin de dispositif électronique et uniquement à l'aide de moyens mécaniques. On note qu'il est possible grâce à l'invention d'avoir un dispositif de génération d'effort de rappel doté de n barres de torsion ayant chacune une raideur propre Kn fonction de l'angle de rotation ALPHA. Grâce à ces n barres le dispositif peut permettre d'avoir au moins n intensités In d'effort de rappel (F), chaque n^{ième} intensité In étant variable suivant la formule In=Kn*ALPHA.

On note aussi que dans certains cas non illustrés le système de renvoi d'efforts 8 reliant le manche à l'arbre de transmission 6 peut prendre toutes formes permettant de lier les mouvements de rotation du manche autour d'un ou plusieurs axes de rotation aux mouvements de rotation de l'arbre de transmission 6. Dans tous les cas, le système de renvoi d'efforts 8 a pour fonction de lier une/des rotation(s) du manche 2 avec un mouvement de rotation de l'arbre de transmission 6 des moyens de liaison mécanique 5.

Il est également compris dans le cadre de l'invention que les moyens de liaison mécanique 5 puissent comprendre une ou plusieurs pièces de sélection angulaire 17 pour coupler sélectivement une ou plusieurs barres de torsion des moyens élastiques de rappel avec l'arbre de transmission 6. Comme on le voit sur les figures 12a, 12b,12c, 12d une pièce de sélection 17 comporte des butées angulaires et a pour fonction de coupler sélectivement l'arbre de transmission 6 avec une/des barre(s) de torsion en fonction de la rotation de cette pièce 17. Sur ces figures 12a, 12b, 12c, 12d, la pièce de sélection 17 et les moyens de couplage 16a, 16b sont montés à rotation autour d'un même axe. Les pièces de couplage 16a et 16b sont prévues pour être respectivement couplées avec les barres de torsion respectives de manière qu'à toute rotation de la pièce de couplage 16a corresponde une rotation de la barre 14 et qu'à toute rotation de la pièce de couplage 16b corresponde une rotation de la barre 15. Sur la figure 12a, l'angle Alpha est inférieur à 0° et la pièce de sélection 17 n'est pas en prise avec les pièces 16a, 16b, ainsi il n'y a pas de transmission d'effort élastique vers le manche. Sur la figure 12b, l'angle Alpha = 0° et la pièce de sélection 17 est en prise uniquement avec la pièce 16a, mais cette dernière n'étant pas pivotée au-delà de sa position neutre, il n'y a toujours pas de transmission d'effort élastique vers le manche. Sur la figure 12c, l'angle Alpha est supérieur à 0° et la pièce de sélection 17 est en prise avec la pièce 16a mais pas avec la pièce 16b, ainsi il y transmission d'effort élastique vers le manche uniquement via la pièce 16a. Seuls les moyens élastiques liés à rotation avec la pièce 16a génèrent l'effort élastique de rappel. Sur la figure 12d, l'angle Alpha est largement supérieur à 0° et la pièce de sélection 17 est en prise avec les pièces 16a et 16b, ainsi il y transmission d'effort élastique vers le manche via les deux pièces 16a, 16b. Les moyens élastiques respectivement liés à rotation avec les pièces 16a et 16b génèrent l'effort élastique de rappel total.

Le rapport des secteurs d'engrenage liant la bague 16a et la pièce d'entrainement 18a peut être différent du rapport du secteur d'engrenage liant la bague 16b et la pièce d'entrainement 18b de manière que lorsque l'arbre de transmission 6 est assujetti à rotation avec les barres 14, 15, toute rotation de l'arbre 6 entraine des angles de rotations distincts pour chacune des barres 14, 15.

L'invention porte enfin sur un aéronef tel qu'un hélicoptère ou un avion équipé d'un dispositif selon l'invention relié à un manche de pilotage, ce manche étant lui-même relié à des capteurs de déplacement du manche associés à des actionneurs de commande de déplacement de surfaces mobiles de voilure de l'aéronef. L'invention est néanmoins applicable à tout manche de commande.

## Revendications

1. Dispositif de génération d'effort de rappel (1) pour manche de commande (2) mobile depuis une position neutre selon une trajectoire (3) de déplacement, comprenant des moyens de liaison mécanique (5) du manche (2) à des moyens élastiques de rappel (4) du manche (2) vers la position neutre, les moyens de liaison mécanique (5) et les moyens élastiques de rappel (4) sont agencés pour produire, sur une première partie de la trajectoire (3a), une première intensité (I1) d'effort de rappel (F) et, sur une deuxième partie de la trajectoire (3b), une deuxième intensité (I2) d'effort de rappel (F), et en ce que les moyens de liaison mécanique (5) comportent une pièce de transmission (6) adaptée, d'une part, à être liée mécaniquement audit manche (2) de manière qu'à tout déplacement dudit manche (2) le long de la deuxième partie (3b) de la trajectoire corresponde une rotation de la pièce de transmission (6) et, d'autre part, à transmettre l'effort de rappel (F) audit manche (2) au moins lorsque le manche (2) est positionné dans la deuxième partie de la trajectoire (3b), **caractérisé en ce que** lesdits moyens elastiques de rappel (4) comportant au moins un premier type de moyens élastiques de rappel, chaque moyen élastique du premier type comportant des première et deuxième barres de torsion (14, 15) et des moyens de couplage en rotation (16) de ces première et deuxième barres de torsion avec la pièce de transmission (6), ces moyens de couplage (16) étant agencés pour :
- coupler ladite première barre de torsion (14) à la pièce de transmission (6) lorsque cette pièce de transmission est pivotée, par rapport à une position de référence prédéterminée (Ref), d'un angle appartenant à un premier secteur angulaire de couplage (A1) ;
- coupler ladite deuxième barre de torsion (15) à la pièce de transmission (6) lorsque cette pièce de transmission est pivotée, par rapport à la position de référence prédéterminée (Ref), d'un angle appartenant à un deuxième secteur angulaire de couplage (A2) différent du premier secteur angulaire ;
- découpler ladite deuxième barre de torsion vis-à-vis de la pièce de transmission lorsque cette pièce de transmission est pivotée par rapport à la position de référence prédéterminée (Ref) d'un angle situé en dehors du deuxième secteur angulaire prédéterminé (A2).

2. Dispositif selon la revendication 1, dans lequel :
- la première intensité I1 est variable suivant la formule I1 = K1 * ALPHA ; et
- la deuxième intensité 12 est variable suivant la formule I2 = K2 * ALPHA, où
K1 et K2 définissent respectivement des raideurs élastiques constantes et différentes l'une de l'autre et ALPHA (α) désigne un angle de rotation de la pièce de transmission 6 par rapport à une position angulaire de référence (Ref) de cette pièce de transmission (6).

3. Dispositif de génération d'effort de rappel selon l'une quelconque des revendications précédentes, dans lequel les moyens élastiques de rappel (4) comportent au moins une barre de torsion élastique reliée mécaniquement à ladite pièce de transmission (6) de manière que des rotations de ladite pièce de transmission (6) entraînent des torsions de cette barre de torsion.

4. Dispositif selon l'une quelconque des revendications 1 à 4, dans lequel l'une des première et deuxième barres de torsion (14, 15) des moyens élastiques de rappel (4) du premier type a la forme d'un tube et l'autre de ces barres de torsion est placée à l'intérieur de la barre en forme de tube.

5. Dispositif selon l'une quelconque des revendications 1 à 5, dans lequel l'une au moins des première et deuxième barres de torsion (14) des moyens élastiques de rappel du premier type est constituée d'au moins deux sections tubulaires élastiques (S1, S2) disposées de manière concentrique, la première de ces sections (S1) ayant une première extrémité (S11) reliée fixement à une première extrémité (S21) de la deuxième de ces sections (S2) de manière que la torsion de cette barre se fasse au moins entre une deuxième extrémité (S12) de la première barre et une deuxième extrémité (S22) de la deuxième de ces sections (S2).

6. Dispositif selon la revendication 5, dans lequel ladite au moins une barres constituée d'au moins deux sections tubulaires élastiques (S1, S2) comprend au moins une troisième section tubulaires élastiques (S3) disposée de manière concentrique vis-à-vis des première et deuxième sections (S1, S2), la deuxième de ces sections (S2) étant reliée fixement à une première extrémité (S31) de la troisième de ces sections (S3), les liaisons de la deuxième section (S2) avec les première et troisième sections (S1, S3) respectives étant éloignées l'une de l'autre de manière que la torsion de cette barre se fasse au moins entre la deuxième extrémité (S12) de la première barre et une deuxième extrémité (S32) de la troisième de ces sections (S3).

7. Dispositif selon l'une quelconque des revendications 1 à 7, dans lequel chaque moyen élastique du premier type comporte une troisième barre de torsion (18) placée de manière concentrique vis-à-vis des première et deuxième barres de torsion (14, 15) et cette troisième barre (18) a ses extrémités assemblées fixement avec les extrémités d'une des première ou deuxième barres (14, 15).

8. Dispositif selon l'une quelconque des revendications précédentes, dans laquelle lesdits moyens élastiques de rappel comportent au moins un deuxième type de moyens élastiques de rappel, chaque moyen élastique du deuxième type comportant au moins une barre de torsion et des moyens de couplage (22) de la barre de torsion à la pièce de transmission, ces moyens de couplage étant tels que la rotation de la pièce de transmission (6) entraîne la torsion de cette barre de torsion des moyens élastiques du deuxième type ; et ces moyens élastiques du second type comportent un système de butées angulaires (21) disposées de manière à autoriser la torsion de cette barre de torsion sur toute sa longueur (L) dans une limite de torsion maximale prédéterminée par des butées angulaires (21) et pour interdire une augmentation de la torsion d'une première portion de longueur (L1) de cette barre et autoriser l'augmentation de la torsion d'une deuxième portion de longueur (L2) de cette barre dès lors que la limite de torsion prédéterminée est dépassée.

9. Dispositif selon la revendication 8, comportant :
- au moins un moyen élastique du premier type; et
- au moins un moyen élastique du deuxième type;
ces deux moyens élastiques des premier et deuxième types étant simultanément couplés à la pièce de transmission (6).

10. Dispositif selon l'une quelconque des revendications précédentes, dans lequel les moyens de liaison mécanique (5) sont adaptés, pour que sur une troisième partie de trajectoire (3c) distincte des première et deuxième parties (3a, 3b), les moyens élastiques soient découplés du manche (2).

## Patentansprüche

1. Vorrichtung (1) zur Erzeugung einer Rückstellkraft für einen Steuerknüppel (2), der von einer neutralen Position entlang einer Verschiebungsbahn (3) beweglich ist, umfassend Mittel (5) zur mechanischen Verbindung des Steuerknüppels (2) mit elastischen Rückstellmitteln (4) zum Rückstellen des Steuerknüppels (2) in die neutrale Position, wobei die Mittel (5) zur mechanischen Verbindung und die elastischen Rückstellmittel (4) so ausgebildet sind, dass sie auf einem ersten Abschnitt (3a) der Bahn eine erste Intensität (I1) einer Rückstellkraft (F) und auf einem zweiten Abschnitt (3b) der Bahn eine zweite Intensität (I2) einer Rückstellkraft (F) erzeugen, und dass die Mittel (5) zur mechanischen Verbindung ein Übertragungsteil (6) umfassen, das dazu geeignet ist, einerseits derart mechanisch mit dem Steuerknüppel (2) verbunden zu werden, dass jeder Verschiebung des Steuerknüppels (2) entlang des zweiten Abschnitts (3b) der Bahn eine Drehung des Übertragungsteils (6) entspricht, und andererseits die Rückstellkraft (F) auf den Steuerknüppel (2) zumindest dann zu übertragen, wenn der Steuerknüppel (2) in dem zweiten Abschnitt (3b) der Bahn positioniert ist, **dadurch gekennzeichnet, dass** die elastischen Rückstellmittel (4) mindestens eine erste Art von elastischen Rückstellmitteln umfassen, wobei jedes elastische Mittel der ersten Art einen ersten und einen zweiten Torsionsstab (14, 15) und Drehkopplungsmittel (16) zur Drehkopplung dieses ersten und dieses zweiten Torsionsstabes mit dem Übertragungsteil (6) umfassen, wobei diese Kopplungsmittel (16) derart ausgebildet sind, dass sie:
- den ersten Torsionsstab (14) mit dem Übertragungsteil (6) koppeln, wenn dieses Übertragungsteil in Bezug auf eine vorgegebene Bezugsposition (Ref) um einen Winkel verschwenkt wird, der zu einem ersten Kopplungswinkelsektor (A1) gehört;
- den zweiten Torsionsstab (15) mit dem Übertragungsteil (6) koppeln, wenn dieses Übertragungsteil in Bezug auf die vorgegebene Bezugsposition (Ref) um einen Winkel verschwenkt wird, der zu einem zweiten Kopplungswinkelsektor (A2) gehört, der sich von dem ersten Winkelsektor unterscheidet;
- den zweiten Torsionsstab in Bezug auf das Übertragungsteil entkoppeln, wenn dieses Übertragungsteil in Bezug auf die vorgegebene Bezugsposition (Ref) um einen Winkel verschwenkt wird, der sich außerhalb des zweiten vorgegebenen Winkelsektors (A2) befindet.

2. Vorrichtung nach Anspruch 1, wobei:
- die erste Intensität I1 gemäß der Formel I1 = K1 * ALPHA variabel ist; und
- die zweite Intensität I2 gemäß der Formel I2 = K2 * ALPHA variabel ist; wobei
K1 und K2 jeweils konstante und zueinander verschiedene elastische Steifigkeiten definieren und ALPHA (α) einen Rotationswinkel des Übertragungsteils (6) in Bezug auf eine Bezugswinkelposition (Ref) dieses Übertragungsteils (6) bezeichnet.

3. Vorrichtung zur Erzeugung einer Rückstellkraft nach einem der vorhergehenden Ansprüche, wobei die elastischen Rückstellmittel (4) mindestens einen elastischen Torsionsstab umfassen, der mechanisch mit dem Übertragungsteil (6) derart verbunden ist, dass die Drehungen des Übertragungsteils (6) Torsionen dieses Torsionsstabes bewirken.

4. Vorrichtung nach einem der Ansprüche 1 bis 4, wobei der erste oder der zweite Torsionsstab (14, 15) der elastischen Rückstellmittel (4) der ersten Art die Form eines Rohres hat und der andere dieser Torsionsstäbe im Inneren des rohrförmigen Stabes angeordnet ist.

5. Vorrichtung nach einem der Ansprüche 1 bis 5, wobei der erste und/oder der zweite Torsionsstab (14) der elastischen Rückstellmittel der ersten Art aus mindestens zwei elastischen rohrförmigen Abschnitten (S1, S2) gebildet ist, die konzentrisch angeordnet sind, wobei der erste dieser Abschnitte (S1) ein erstes Ende (S11) hat, das fest mit einem ersten Ende (S21) des zweiten dieser Abschnitte (S2) derart verbunden ist, dass die Torsion dieses Stabes mindestens zwischen einem zweite Ende (S12) des ersten Stabes und einem zweiten Ende (S22) des zweiten dieser Abschnitte (S2) erfolgt.

6. Vorrichtung nach Anspruch 5, wobei der mindestens eine Stab, der aus mindestens zwei elastischen rohrförmigen Abschnitten (S1, S2) gebildet ist, mindestens einen dritten elastischen rohrförmigen Abschnitt (S3) umfasst, der konzentrisch in Bezug auf den ersten und den zweiten Abschnitt (S1, S2) angeordnet ist, wobei der zweite dieser Abschnitte (S2) fest mit einem ersten Ende (S31) des dritten dieser Abschnitte (S3) verbunden ist, wobei die Verbindungen des zweiten Abschnitts (S2) mit dem ersten bzw. dem dritten Abschnitt (S1, S3) zueinander derart entfernt sind, dass die Torsion dieses Stabes mindestens zwischen dem zweiten Ende (S12) des ersten Stabes und einem zweiten Ende (S32) des dritten dieser Abschnitte (S3) erfolgt.

7. Vorrichtung nach einem der Ansprüche 1 bis 7, wobei jedes elastische Mittel der ersten Art einen dritten Torsionsstab (18) umfasst, der konzentrisch in Bezug auf den ersten und den zweiten Torsionsstab (14, 15) angeordnet ist und dieser dritte Stab (18) mit seinen Enden fest mit den Enden eines Stabes aus dem ersten oder dem zweiten Stab (14, 15) montiert ist.

8. Vorrichtung nach einem der vorhergehenden Ansprüche, wobei die elastischen Rückstellmittel mindestens eine zweite Art von elastischen Rückstellmitteln umfassen, wobei jedes elastische Mittel der zweiten Art mindestens einen Torsionsstab und Kopplungsmittel (22) zur Kopplung des Torsionsstabes mit dem Übertragungsteil umfasst, wobei diese Kopplungsmittel derart sind, dass die Drehung des Übertragungsteils (6) die Torsion dieses Torsionsstabes der elastischen Mittel der zweiten Art bewirkt; und diese elastischen Mittel der zweiten Art ein System von Winkelanschlägen (21) umfassen, die angeordnet sind, um die Torsion dieses Torsionsstabes über seine gesamte Länge (L) in einem von den Winkelanschlägen (21) vorgegebenen maximalen Torsionslimit zu gestatten und um eine Zunahme der Torsion eines ersten Längenabschnitts (L1) dieses Stabes zu verhindern und die Zunahme der Torsion eines zweiten Längenabschnittes (L2) dieses Stabes zu gestatten, sobald das vorgegebene Torsionslimit überschritten ist.

9. Vorrichtung nach Anspruch 8, umfassend:
- mindestens ein elastisches Mittel der ersten Art; und
- mindestens ein elastisches Mittel der zweiten Art;
wobei diese beiden elastischen Mittel der ersten und der zweiten Art gleichzeitig an das Übertragungsteil (6) gekoppelt sind.

10. Vorrichtung nach einem der vorhergehenden Ansprüche, wobei die Mittel (5) zur mechanischen Verbindung angepasst sind, damit auf einem dritten Bahnabschnitt (3c), der sich von dem ersten und dem zweiten Abschnitt (3a, 3b) unterscheidet, die elastischen Mittel von dem Steuerknüppel (2) entkoppelt sind.

## Claims

1. A device (1) for generating a return force for a control stick (2) that is movable from a neutral position along a travel path (3), the device comprising mechanical connection means (5) for connecting the stick (2) to resilient return means (4) for returning the stick (2) towards the neutral position, the mechanical connection means (5) and the resilient return means (4) are arranged to produce, over a first portion (3a) of the travel path, a first strength (I1) of return force (F) and, over a second portion (3b) of the travel path, a second strength (I2) of return force (F), and in that the mechanical connection means (5) include a transmission part (6) adapted firstly to be mechanically connected to said stick (2) in such a manner that any movement of said stick (2) along the second portion (3b) of the travel path corresponds to turning movement of the transmission part (6), and secondly to transmit the return force (F) to said stick (2) at least when the stick (2) is positioned in the second portion (3b) of the travel path **characterized in that** the resilient return means (4) comprise at least a first type of resilient return means, each resilient means of the first type comprising first and second torsion bars (14, 15) and means (16) for providing rotary coupling between the first and second torsion bars and the transmission part (6), these coupling means (16) being arranged:
• to couple said first torsion bar (14) to the transmission part (6) when said transmission part is pivoted relative to a predetermined reference position (Ref) through an angle forming part of a first angular coupling sector (A1);
• to couple said second torsion bar (15) to the transmission part (6) when said transmission part is pivoted, relative to the predetermined reference position (Ref) through an angle forming part of a second angular coupling sector (A2) different from the first angular sector; and
• to decouple said second torsion bar from the transmission part when said transmission part is pivoted relative to the predetermined reference position (Ref) through an angle lying outside the second predetermined angular sector (A2).

2. A device according to claim 1, wherein:
• the first strength I1 is variable in application of the formula I1 = K1*ALPHA; and
• the second strength I2 is variable in application of the formula I2 = K2*ALPHA;
where K1 and K2 respectively define constant and mutually different resilient stiffnesses and ALPHA (α) designates an angle through which the transmission part 6 has turned relative to a reference angular position (Ref) for said transmission part (6).

3. A return force generator device according to either preceding claim, wherein the resilient return means (4) include at least one resilient torsion bar mechanically connected to said transmission part (6) in such a manner that turning of said transmission part (6) twists the torsion bar.

4. A device according to any one of claims 1 to 4, wherein one of the first and second torsion bars (14, 15) of the resilient return means (4) of the first type is in the form of a tube and the other of these torsion bars is placed inside the bar in the form of a tube.

5. A device according to any one of claim 1 to 5, wherein at least one of the first and second torsion bars (14) of the resilient return means of the first type is constituted by at least two resilient tubular sections (S1, S2) arranged coaxially, the first of these sections (S1) having a first end (S11) fixedly connected to a first end (S21) of the second of these sections (S2) so that the twisting of said torsion bar takes place at least between a second end (S12) of the first torsion bar and a second end (S22) of the second of the sections (S2).

6. A device according to claim 5, wherein said at least one torsion bar constituted by at least two resilient tubular sections (S1, S2) includes at least one third resilient tubular section (S3) disposed coaxially relative to the first and second sections (S1, S2), the second of these sections (S2) being fixedly connected to a first end (S31) of the third of these sections (S3), the respective connections of the second section (S2) with the first and third sections (S1, S3) being spaced apart from each other so that the twisting of this torsion bar takes place at least between the second end (S12) of the first torsion bar and a second end (S32) of the third of these sections (S3).

7. A device according to any one of claims 1 to 7, wherein each resilient means of the first type includes a third torsion bar (18) placed coaxially relative to the first and second torsion bars (14, 15), and the third torsion bar (18) has its end fixedly assembled with the ends of one of the first and second torsion bars (14, 15).

8. A device according to any preceding claim, wherein said resilient return means include at least one second type of resilient return means, each resilient means of the second type including at least one torsion bar and coupling means (22) for coupling the torsion bar to the transmission part, the coupling means being such that turning of the transmission part (6) causes twisting of said torsion bar of the resilient means of the second type; and said resilient means of the second type include an angle abutment system (21) arranged in such a manner as to allow said torsion bar of said resilient means of the second type to twist over its entire length (L) within a maximum twisting limit predetermined by the angle abutments (21), and to prevent any increase in the twisting of a first fraction of the length (L1) of the torsion bar while allowing the twisting of a second fraction of the length (L2) of the torsion bar to increase when the predetermined twisting limit is exceeded.

9. A device according to claim 8 comprising:
• at least one resilient means of the first type; and
• at least one resilient means of the second type; these two resilient means of the first and second types being coupled simultaneously to the transmission part (6).

10. A device according to any preceding claim, wherein the mechanical connection means (5) are adapted so that over a third portion (3c) of the travel path distinct from the first and second portions (3a, 3b), the resilient means are decoupled from the stick (2).
